# EUROPEAN PATENT SPECIFICATION

(11) **EP 0 436 208 B1**
(45) Date of publication and mention of the grant of the patent: **22.03.1995**
(21) Application number: 90125266.8
(22) Date of filing: 21.12.1990
(51) Int. Cl.: C08B 30/12, A23L 1/0522

(54) **A process for the production of a hot-dispersible starch**
Verfahren zur Herstellung einer heissdispergierbaren Stärke
Procédé de préparation d'amidon dispersable à chaud

(30) Priority: 03.01.1990 DE 4000087
(43) Date of publication of application: 10.07.1991
(73) Proprietor: CPC INTERNATIONAL INC., Englewood Cliffs New Jersey 07632-9976 (US)
(72) Inventor: Stute, Rolf, Dr., W-7101 Flein (DE); Neste, Helmuth-Rainer, Dr., W-2400 Lübeck-Israelsdorf (DE); Melwitz, Axel, W-7101 Unterheinriet (DE)
(74) Representative: Lederer, Franz, Dr.

(56) References cited:
- EP-A- 0 076 381
- EP-A- 0 112 504
- DD-A- 249 846
- DE-A- 2 930 664
- DE-C- 704 718
- STARKE. vol. 32, no. 4, WEINHEIM DE pages 125 - 126; K. LARSSON: 'INHIBITION OF STARCH GELATINIZATION BY AMYLOSE-LIPID COMPLEX FORMATION'
- Journal of Science of Food and Agriculture 1975,Vol. 26, pages 1163-1170.
- Phytochemistry 1968, Vol.7, pages 1907-1914

## Description

The term 'HMT starches' is applied by those in the art to starches which have been subjected to a heat and moisture treatment. In contrast to other physical treatments (as for instance in the case of production of pre-gelatinized cold swelling starches), in such a purely physical treatment the properties of the starch (ability to swell, dispersibility etc.) are modified in such a way that no gelatinization or any other recognizable change of the starch granules, their form etc. is detectable (for instance the typical birefringence of a native starch granule is completely retained when such HMT-starches are examined under a polarizing microscope).

Significant changes in the starch properties can be obtained by a heat-moisture treatment of those starches showing a B or C type x-ray pattern. A typical B type starch is potato starch, which therefore is particularly suited for a heat-moisture treatment.

In the case of potato starch, the original properties are substantially modified by such a heat-moisture treatment. While for instance untreated potato starch after gelatinization yields a transparent clear paste with a stringy, sticky consistence, a heat-moisture treated potato starch forms short, opaque pastes and on cooling even moldable gels. While the native starch forms lumps when added into boiling water, the heat-moisture treated starch is hot dispersible and while native potato starch thickens as soon as the gelatinization temperature is attained, in the case of a heat-moisture treated starch the gelatinization is delayed and in some cases may take place even at temperatures above 100°C.

The essential parameters determining the degree of heat-moisture treatment are the moisture content of the starch, the temperature of treatment and the time of treatment. In general, it can be said the higher the moisture content of the starch, the higher the degree of modification, however, moisture contents above a certain level are limiting the maximum possible processing temperature because otherwise the starch granule will be gelatinized. In the same way an increase in temperature increases the degree of modification, but again too high temperatures not only involve the risk of gelatinization but also the risk of thermal degradation of the starch (the so-called dextrinization). To the same manner prolonged treatment times lead to higher degrees of modification.

In the processes known up to now, in which aqueous starch slurries are used, a heating therefore is only possible up to a temperature just below the gelatinization temperature. This needs not only a careful control of temperature and time in order to exclude any gelatinization of the starch, but also results in long treatment times of up to several days. For this reason it is preferred to reduce the moisture content to such a degree that the starches can be treated without gelatinization at temperatures above the normal gelatinization temperature. These processes are also called "semi-dry processes". In this manner the treatment time can be substantially shortened. The general aspects of heat-moisture treatment of starches are described in detail in "Heat-Moisture Treatment of Starch" in Cereal Chemistry 44, (1967) 8-26. In addition, a whole series of patents describe various forms of heat-moisture treatments. The majority of these are semi-dry processes.

The German patent specification 2,930,664 provides a very detailled description of the problems which are involved in semi-dry processes for the manufacturing of HMT starches. The patent relates to a food product which contains a thickening agent consisting of HMT root and/or tuber starch. The starches used for this purpose are treated in a semi-dry process at 103°C for 115 minutes or, respectively, at 100°C for 195 minutes.

Further patents using the semi-dry principle recommend the addition of emulsifiers (European patent 76381, US patent 184,527) or, respectively, the use of microwaves for the transfer of heat (European patent 150,715 and US patent 4,508,576).

In contrast to the semi-dry processes in those processes operating in an aqueous suspension the main emphasis is placed on the suppression of the gelatinization which can easily occur in the presence of excess water. In the US patent 3,977,897 the addition of salts such as sodium or magnesium sulfate is recommended in order to increase the gelatinization point, but such salts have to be removed by intensive washing before these starches can be used in foodstuffs. By using very high salt concentrations it is possible to apply temperatures up to 100°C which, of course, remarkably reduces the treatment times.

In the US patent 3,583,874 and the European patent 110,549 the gelatinizing effect of water during the heat-moisture treatment is suppressed by a sufficiently large addition of organic solvents, miscible with water (e.g. alcohol). These methods are not only technically complicated and expensive so that they have thus not been proposed for the HMT starches in question here, but only for the production of special cold swelling starches. In these processes the removal of the solvent is always the problem, which, of course, is necessary before such starches can be used for foodstuff applications.

"Die Stärke" 1980, vol. 32, No. 4, pages 125-126 discloses that gelatinization of starch can be inhibited by a mono-acyl lipid.

DE-C-704 718 discloses that by adding lecithin to starch before heating a cold swellable starch without the formation of lumps is formed.

GB-A- 2 181 444 concerns a process for treating carbohydrate material to render it susceptible to subsequent enzymic conversion to one or more fermentable sugars. This known process is not designed to prepare a HMT-starch but to pre-gelatinize starch. The process comprises mixing the carbohydrate material with water and heating the mixture in the presence of a surfactant. By the use of a surfactant in this process the gelatinization temperature can be lowered.

Also GB-A- 2 008 137 discloses a continous starch gelatinization process, but not the preparation of a HMT-starch. Gelatinization must be avoided in the preparation of HMT-starches.

DE-PS 554 945 discloses a process for producing cold water swellable starches, i.e. pre-gelatinized starches, whereby the soluble components from the potatoe should be removed before the insoluble components are processed to produce a pre-gelatinized starch. This is in contrast to the present invention which teaches that the soluble components of the raw potatoe must be maintained during the treatment.

Processes in which an effective heat-moisture treatment is performed in a short treatment time in an aqueous suspension without suppression of gelatinization, have so far not been described.

The present invention thus relates to a process for the production of a hot-dispersible HMT starch, in particular potato starch with delayed thickening by the treatment of the starch in the presence of moisture at an elevated temperature and preferably in an aqueous suspension.

It has surprisingly been discovered that the heat-moisture treatment in an aqueous system may be considerably accelerated if the treatment is performed in the presence of rasped potatoes and/or potato juice.

An acceleration of the process means that the heat-moisture treatment may not only be performed at lower temperatures normally in a range of 50 to 80°C, but also in a substantially shorter time, normally of 20 to 80 minutes. It is thus the first time that a process operating in an aqueous suspension can be performed in a technically simple and economic manner.

In the case of a typical execution of the treatment of the invention the temperature is approximately 55°C and the duration approximately 30 minutes. In order to produce a HMT potato starch with the same delayed thickening and also otherwise comparable properties via the conventional semi-dry process it would be necessary to use a temperature of 100°C and a treatment time of 120 minutes.

The process in accordance with the invention may, of course, also be used for entire potatoes, but such a form of the invention is not suitable for use in industry because it is inefficient and therefore generally not preferred. For an industrial application rasped potatoes are preferred as they normally are obtained in the first process stages of an industrial potato starch production and/or the potato juice, which after the starch-fiber separation is remixed with the starch.

In the same way as potato starch can be treated, also other starches with a B or C type X-ray pattern, which are suited for a heat-moisture-treatment, can, of course, be treated. This means most of the root, tuber, and legume starches like Canna-, lotus root or sweet potato starch.

It is thought that the unsaturated fatty acids present in the potatoes, which are liberated upon the destruction of the cells or which are rapidly produced by an enzymatic hydrolysis, are at least partly responsible for the effective acceleration of HMT-starch modification. However, in addition, other components of the potato are active as co-catalysts, since a potato juice, from which the protein and the lipids have been removed still leads to a distinct, albeit reduced accelerating effect (see example 3).

It is known that potato lipids (mainly phosphatides and galactolipids) are characterized by a high content of unsaturated fatty acids. Therefore, it has already been proposed (see German patent 2,551,342) to isolate the lipids from potato juice as a valuable by-product of the potato starch production. Due to their high content of phosphatides and galactolipids these lipids can have an application potential as emulsifiers. However, it was not known up to now that these lipids or their components are suitable for accelerating the modification of starch in an heat-moisture-treatment.

Linoleic acid and linolenic acids, which are formed by the enzymatic cleavage of potato lipids, and which, if added as such, also show a pronounced accelerating effect (example 4) even without the co-catalytic effect of potato juice are hardly suitable as accelerators for industrial heat-moisture-treatment of starches, on one hand because of the price but more especially due to the lack of stability (autoxidation, polymerization). Starches, to which linoleic acid or linolenic acid have been directly added prior to the heat-moisture treatment, were unsuitable for foodstuff purposes after the treatment, since they had developed a distinct off-taste.

The process in accordance with the invention may also be operated as a semi-dry process, in which commercially available potato starch is equilibrated at a moisture content suitable for a heat-moisture treatment according to the semi-dry conditions by the addition of potato juice. In such a semi-dry treatment the moisture content should generally not exceed 30 % and in no case exceed 35%, because otherwise, the flowability of the starch will be insufficient for the application of the semi-dry method. Moisture contents in a range of 15 to 35 % are possible. Preferably, the moisture content is in the range of 18 to 30 %.

In the process of the invention it is, of course, also possible to use conventional additives, especially surface-active substances like for instance glycerol monostearate, lysolecithin, stearoyl-2-lactylate and Na-stearylfumarate, which usually are added in such processes as ingredients or because of technical reasons.

The preferred field of application of the process in accordance with the invention is the slurry method. Hitherto, slurry methods have been avoided as far as possible in favor of semi-dry ones, because the long treatment times which are necessary at temperatures where no gelatinization of the starch occurs are distinct technical and economic disadvantages. Now, according to the invention, also at low temperatures (preferred in accordance with the invention 30 minutes at 55°C) very short treatment times are possible. Under these conditions in the presence of water only, no modification of the potato starch can be obtained at all (Example 1).

In a particularly preferred application of the invention, the treatment process is thus performed during the production of potato starch within the raw potato slurry prior to the separation of the potato juice and the pulp. The slurry may be produced from rasped potatoes with or without the addition of additional water.

It is, of course, also possible to suspend the starch in potato juice again after the separation of the pulp or to use commercially available potato starch. The water content in the slurry process will generally be in the range between 40 and 90 %. It is an advantage if the starch dry matter content is approximately 10 to 25 %.

In order to prevent a discoloration of the raw potato slurry or of the potato juice during the treatment process, it is recommended, if no other method has been selected for preventing discoloration, to add sulfite in a concentration which is conventionally used in potato starch manufacturing. The addition of 200 to 800 and preferably 400 to 600 ppm SO₂ based on the total slurry weight ist generally sufficient.

Compared with processes known so far for the heat-moisture treatment of starches and more especially as compared with the semi-dry process, which presently are preferred, the process in accordance with the invention offers the following advantages:
1 The treatment may be carried out at low temperatures and even in open containers. Pressure vessels, as they are required for the temperatures above 100°C and which are usually applied in semi-dry processes, are no longer necessary. Furthermore, there is no risk of partial gelatinization, which in pressure vessels always is a technical problem because of water condensation at the cooler part of the vessels.
2 The heat-moisture treatment may be performed directly or respectively in a by-pass of the potato starch manufacturing process. The separation and drying of the starch therefore does not represent an additional process step.
3 The slurry method is easier to control with respect to the degree of treatment. While in the case of semi-dry processes small differences in moisture lead to great differences in the degree of modification, this factor does not play any role due to the presence of excess water.
4 The treatment process may be performed without the recommended additions of emulsifiers such as glycerol monostearate etc., but it may, of course, be performed in the presence of such emulsifiers as well as in the presence of linoleic and and/or linolenic acid respectively their alkali salts. In spite of the fact that the latter may be an advantage technically, it is a disadvantage regarding price and stability.

According to the improved hot dispersibility and the delayed thickening the HMT potato starch produced using the present invention is particularly suited as a binding agent in dry foodstuffs and more especially in all those cases where a free flowing binding agent is required, which can be added into boiling liquids without the formation of lumps, as for instance as a sauce binder or a thickener for dry soups.

The effectiveness of the process according to the invention will be explained on the basis of the following examples 1 through 6 in detail (example 1-4 Brabenderviscograph, 500 cmg load cell, 25 g starch in 475 ml water each, example 5 and 6 350 cmg load cell, 30 g starch in 470 ml water).

### Example 1

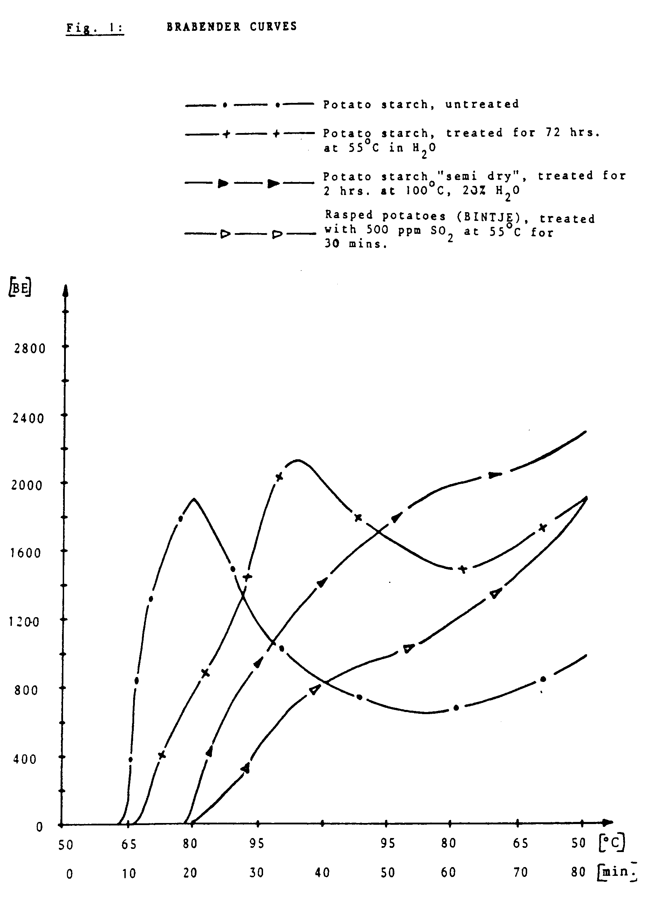

1.5 kg of potatoes of the variety Saturna are rasped with the addition of 500 ppm SO₂ in the conventional manner of a potato starch production. The slurry, which may have some water added in order to reduce the viscosity is heated for 30 minutes at 55°C while stirring continuously. Afterwards, the starch is separated in the manner as in the production of potato starch. The isolated starch shows an even more pronounced modification of its properties than a starch (figure 1) treated in the semi-dry process for 2 hours at 100°C and a water content of 20 %. A heat-moisutre treatment in water even if extended to 72 hours does not lead to anything like as good a result.

### Example 2

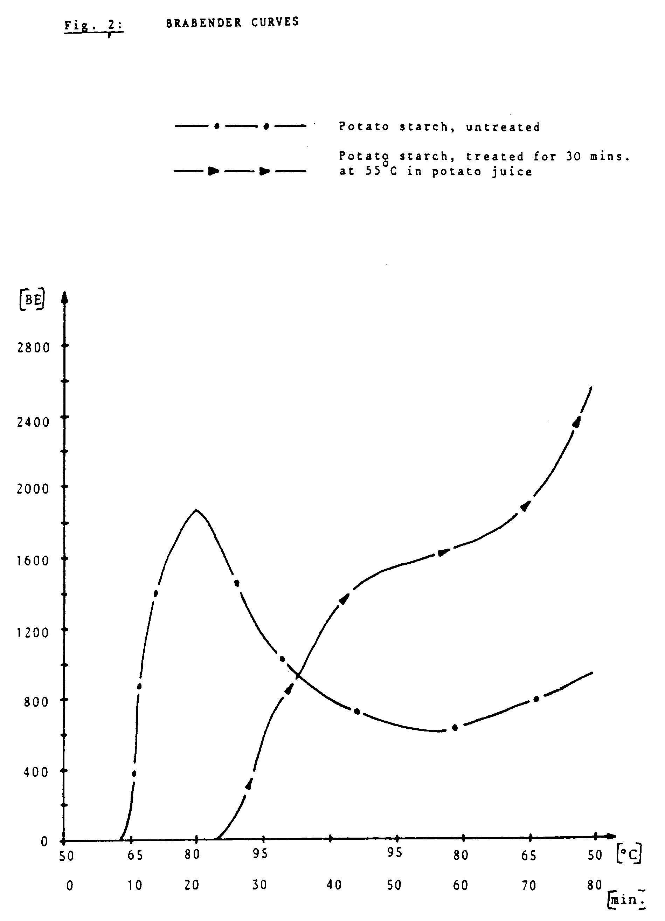

200 g of native potato starch are heated in 2 l of potato juice as it is produced in potato starch factories after separation of the starch and pulp, for 30 minutes at 55°C. Also, in this case, there is similarly pronounced treatment effect as is the case of rasped potato (Figure 2).

### Comparative Example A

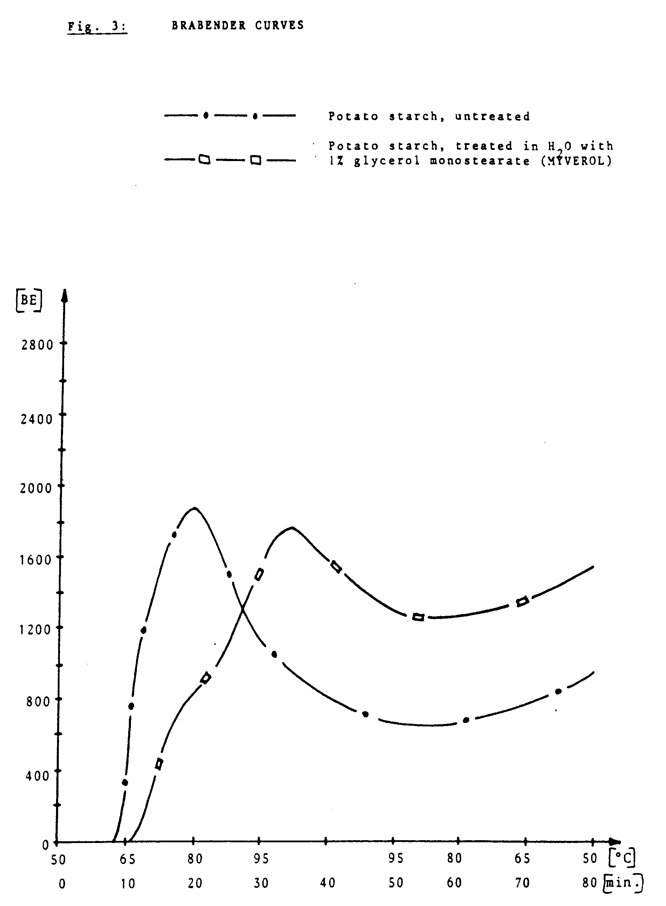

200 g of native potato starch are heated in 2 l of water in the presence of 1 % Myverol (commercially available glycerol monostearate) for 30 minutes at 55°C. With this emulsifier, which form complexes with starch and which is recommended in various heat-moisture processes as an additive enhancing the treatment effect no effect can be obtained which is comparable with the effect obtained in the presence of potato constituents (Figure 3).

### Example 3.

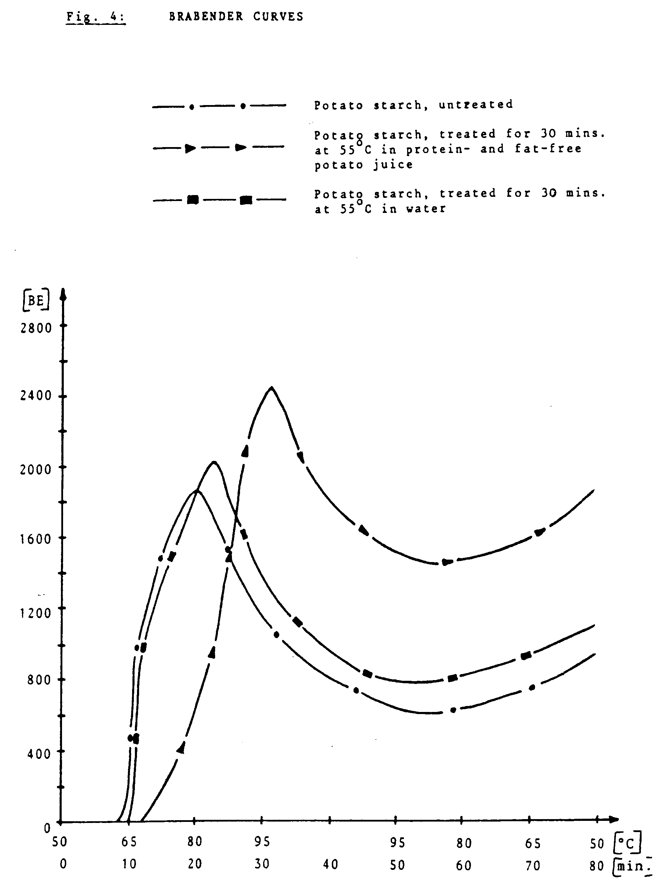

Protein and fat were removed from 2 l of potato juice by thermal coagulation of the protein respectively extraction of the fat. 200 g of native potato starch were treated therein under the same conditions as in Example 1. Also, the protein- and fat-free potato juice produced a distinct but somewhat weaker modification (Figure 4). The accelerating action is thus a synergistic effect of various constituents of the potato resp. potato juice.

### Example 4.

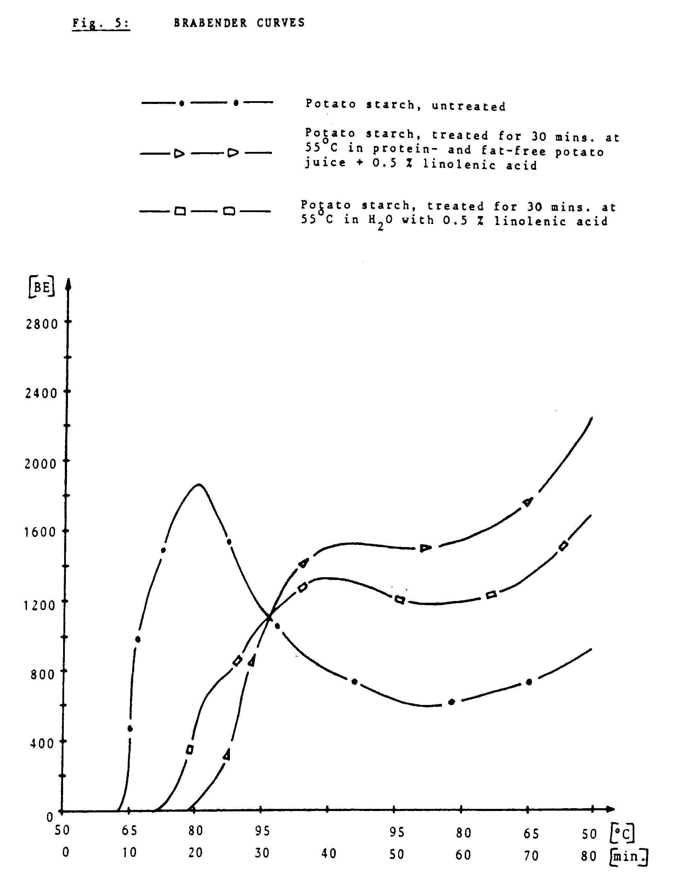

220 g portions of native potato starch were treated (as in Example 3) for 30 minutes at 55°C in water to which 0.5 % linolenic acid had been added on the one hand and on the other hand potato juice free of protein and lipid also containing 0.5 % linolenic acid. As Figure 5 shows, linolenic acid in water has a pronounced accelerating effect on the heat-moisture treatment. However, the effect is again further enhanced by the components of the potato extract water.

### Example 5.

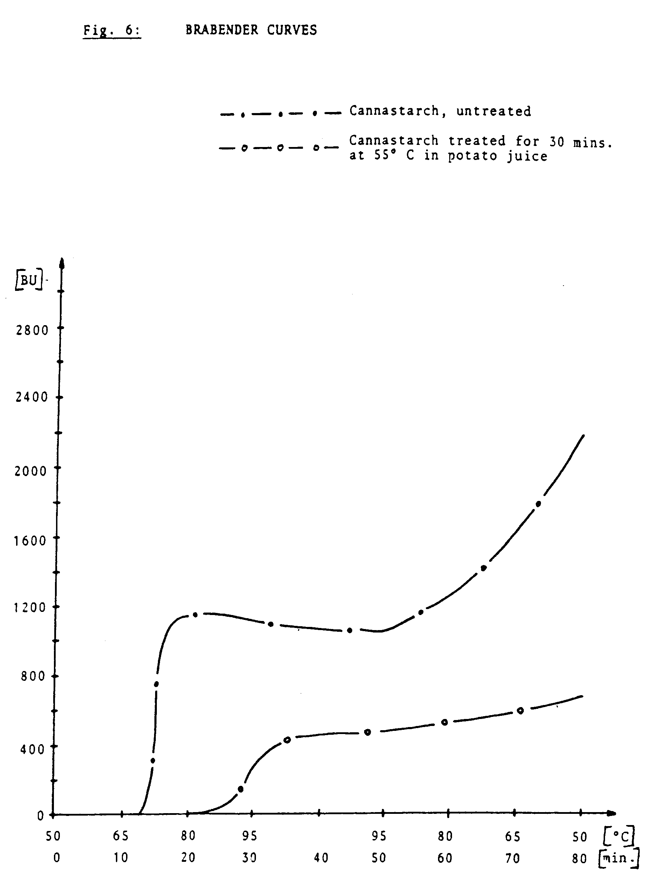

400 g native Canna starch was treated for 30 minutes at 55°C in 1,2 l potato juice obtained from Bintje potatoes to which 500 ppm SO₂ was added. After the treatment the starch was isolated and dried as usual. Figure 6 shows that also for this starch by the treatment in potato juice a strong property modification can be obtained.

### Example 6.

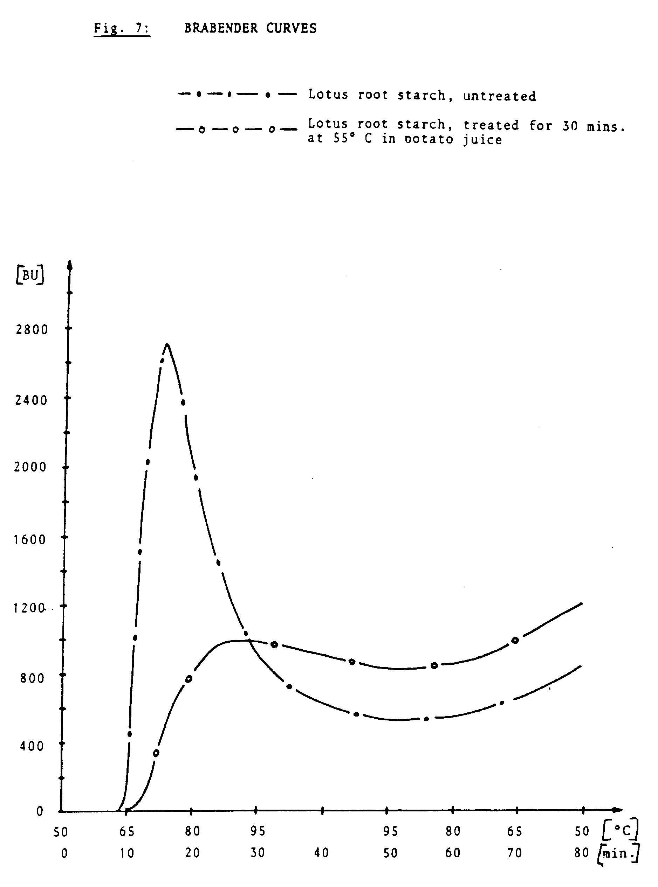

400 g lotus root starch was treated in the same way as Canna starch was treated in Example 5. Again, the property changes, which are typical for a successful heat-moisture-treatment, were obtained (Fig. 7).

## Claims

1. Process for the production of a hot-dispersible HMT-starch with delayed thickening by treating starch in the presence of moisture at an elevated temperature, characterized in that the treatment is carried out at a temperature of 50-80°C for 20-80 minutes in the presence of rasped potatoes and/or potato juice.

2. Process according to claim 1, characterized in that potato starch is used as starch.

3. Process according to one of the preceding claims, characterized in that the treatment is carried out at 55°C for 30 minutes.

4. Process according to one of the preceding claims, characterized in that it is carried out in a slurry process.

5. Process according to claim 4, characterized in that the liquid content of the slurry amounts to 40-90 %.

6. Process according to claim 4 or 5, characterized in that it is worked with a starch dry matter content of 10- 25 %.

7. Process according to one of claims 2-6, characterized in that it is carried out during the manufacturing of the potato starch within the potato raw slurry prior to the separation of the potato juice and the pulp and before the starch is isolated in the usual manner.

8. Process according to one of claims 2-6, characterized in that it is carried out during the potato starch manufacturing process with the starch respectively starch fraction which is recombined with the potato juice before the starch is isolated and dried in the usual manner.

9. Process according to one of claims 1-3, characterized in that it is carried out with potato juice in a semi-dry process with a moisture content of the mass to be treated of 15-35 %, preferably of 18-30 %.

## Patentansprüche

1. Verfahren zur Herstellung einer heiß-dispergierbaren HFB-Stärke mit verzögerter Verdickungswirkung durch Behandlung von Stärke in Anwesenheit von Feuchtigkeit bei erhöhter Temperatur, dadurch gekennzeichnet, daß die Behandlung bei einer Temperatur von 50-80°C während 20-80 Minuten in Anwesenheit von zerkleinerten Kartoffeln und/oder Kartoffelfruchtwasser durchgeführt wird.

2. Verfahren nach Anspruch 1, dadurch gekennzeichnet, daß als Stärke Kartoffelstärke eingesetzt wird.

3. Verfahren nach einem der vorhergehenden Ansprüche, dadurch gekennzeichnet, daß die Behandlung bei 55°C während 30 Minuten durchgeführt wird.

4. Verfahren nach einem der vorhergehenden Ansprüche, dadurch gekennzeichnet, daß es in einem Slurry-Verfahren durchgeführt wird.

5. Verfahren nach Anspruch 4, dadurch gekennzeichnet, daß der Flüssigkeitsgehalt des Slurry 40-90 % beträgt.

6. Verfahren nach Anspruch 4 oder 5, dadurch gekennzeichnet, daß mit einem Stärke-Trockensubstanz-Gehalt von 10-25 % gearbeitet wird.

7. Verfahren nach einem der Ansprüche 2-6, dadurch gekennzeichnet, daß es während der Gewinnung der Kartoffelstärke in dem Kartoffelrohbrei vor Abtrennung des Kartoffelfruchtwassers und der Pülpe durchgeführt wird, bevor die Stärke in der üblichen Weise gewonnen wird.

8. Verfahren nach einem der Ansprüche 2-6, dadurch gekennzeichnet, daß es während des Kartoffelstärkegewinnungsprozesses mit der wieder mit dem Kartoffelfruchtwasser vereinigten Stärke bzw. Stärkefraktion durchgeführt wird, bevor die Stärke in der üblichen Weise isoliert und getrocknet wird.

9. Verfahren nach einem der Ansprüche 1-3, dadurch gekennzeichnet, daß es mit Kartoffelfruchtwasser im Halbtrockenverfahren mit einem Feuchtigkeitsgehalt der Behandlungsmasse von 15-35 % vorzugsweise 18-30 % durchgeführt wird.

## Revendications

1. Procédé de production d'un amidon HMT dispersable à chaud, à épaississement retardé, par traitement de l'amidon en présence d'humidité à une température élevée, caractérisé en ce que le traitement est effectué à une température de 50 à 80°C pendant un temps de 20 à 80 minutes en présence de pommes de terre râpées et/ou de jus de pommes de terre.

2. Procédé suivant la revendication 1, caractérisé en ce que de la fécule de pommes de terre est utilisée comme amidon.

3. Procédé suivant une des revendications précédentes, caractérisé en ce que le traitement est effectué à 55°C pendant 30 minutes.

4. Procédé suivant une des revendications précédentes, caractérisé en ce qu'il est mis en oeuvre en suspension.

5. Procédé suivant la revendication 4, caractérisé en ce que la teneur en liquide de la suspension est comprise dans l'intervalle de 40 à 90 %.

6. Procédé suivant la revendication 4 ou 5, caractérisé en ce qu'il est mis en oeuvre avec une teneur en matière sèche d'amidon de 10 à 25 %.

7. Procédé suivant une des revendications 2 à 6, caractérisé en ce qu'il est mis en oeuvre au cours de la production de la fécule de pommes de terre dans la suspension brute de pomme de terre avant la séparation du jus de pommes de terre et de la pulpe et avant d'isoler l'amidon de manière usuelle.

8. Procédé suivant une des revendications 2 à 6, caractérisé en ce qu'il est mis en oeuvre au cours du procédé de production de fécule de pommes de terre avec l'amidon consistant respectivement en la fraction d'amidon qui est recombinée au jus de pommes de terre avant d'isoler et de sécher l'amidon de manière usuelle.

9. Procédé suivant une des revendications 1 à 3, caractérisé en ce qu'il est mis en oeuvre avec le jus de pommes de terre dans un procédé par voie semi-sèche, avec une teneur en humidité de la masse à traiter de 15 à 35 %, de préférence de 18 à 30 %.
